# FASCICULE DE BREVET EUROPEEN

(11) **EP 0 398 793 B1**
(45) Date de publication et mention de la délivrance du brevet: **09.02.1994**
(21) Numéro de dépôt: 90401270.5
(22) Date de dépôt: 14.05.1990
(51) Int. Cl.: B60L 7/26

(54) **Dispositif de freinage pour véhicule automobile équipé d'un moteur électrique**
Bremsvorrichtung für Kraftfahrzeuge, ausgerüstet mit einem elektrischen Motor
Brake device for motor-vehicle equipped with an electric motor

(30) Priorité: 16.05.1989 FR 8906376
(43) Date de publication de la demande: 22.11.1990
(73) Titulaire: AUTOMOBILES PEUGEOT, 75116 Paris (FR); AUTOMOBILES CITROEN, 92200 Neuilly-sur-Seine (FR)
(72) Inventeur: Saliba, Bernard, 78600 Maisons Lafitte (FR)
(74) Mandataire: Berger, Helmut

(56) Documents cités:
- CH-A- 413 609
- DE-U- 8 614 205
- GB-A- 1 601 575
- US-A- 3 731 168
- US-A- 4 730 151

## Description

L'invention concerne un dispositif de freinage pour véhicule automobile tel que décrit dans le préambule de la revendication principale.

Un tel dispositif de freinage est décrit dans le brevet suisse n 413 609. Dans ce dispositif la semelle est montée fixe sur la pédale de façon que tout déplacement de la semelle entraîne obligatoirement le pivotement de la pédale. Le dispositif de freinage connu présente l'inconvénient majeur que l'ensemble du dispositif doit être particulièrement conçu, la partie de support mécanique incluse, pour que ce dispositif puisse produire les effets de freinage électrique et mécanique décrits.

La présente invention a pour but de proposer un dispositif de freinage qui ne présente pas cet inconvénient de l'état de la technique.

Pour atteindre ce but, le dispositif de freinage selon l'invention comprend les caractéristiques qui sont énoncées dans la partie caractérisante de la revendication 1.

Grâce à ces caractéristiques, il est possible d'utiliser un dispositif de freinage mécanique classique où tout pivotement de la pédale produit un effet de freinage mécanique. Les moyens assurant le freinage électrique sont donc simplement montés sur le dispositif de pédale classique.

D'autres caractéristiques avantageuses de l'invention sont décrites dans les revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
- la figure 1 est une vue schématique du système de commande d'une machine électrique équipant un véhicule automobile ;
- la figure 2 est une vue latérale d'un dispositif de freinage selon la présente invention ; et
- les figures 3 et 4 sont des vues respectivement frontale et latérale du détail indiqué en D sur la figure 2.

Sur la figure sinoptique 1 on a représenté en 1 la machine électrique, avec ses enroulements d'induit 2 et d'excitation 3 et des dispositifs de contrôle 4, 5 respectivement des courants d'induit et d'excitation. Ces dispositifs sont commandés par un dispositif de commande centrale 7, en fonction des signaux électriques en provenance d'organes de commande actionnables par le conducteur du véhicule, tels que l'accélérateur 8, le dispositif de frein 9, le levier de sélection de marche avant/marche arrière 10, la clé de contact 12 et un interrupteur d'arrêt d'urgence 13. Le dispositif de contrôle central 7 qui est du bas niveau de tension électrique est alimenté en énergie à partir d'une batterie 14 du véhicule. Le circuit haute tension comprend une batterie 15 formant la source d'énergie électrique associée au moteur. Entre cette batterie 15 et le dispositif de contrôle d'induit 4 est interposé un dispositif contacteur/disjoncteur 16 relié à la fois au dispositif de contrôle central 7 et à l'interrupteur d'arrêt d'urgence 13.

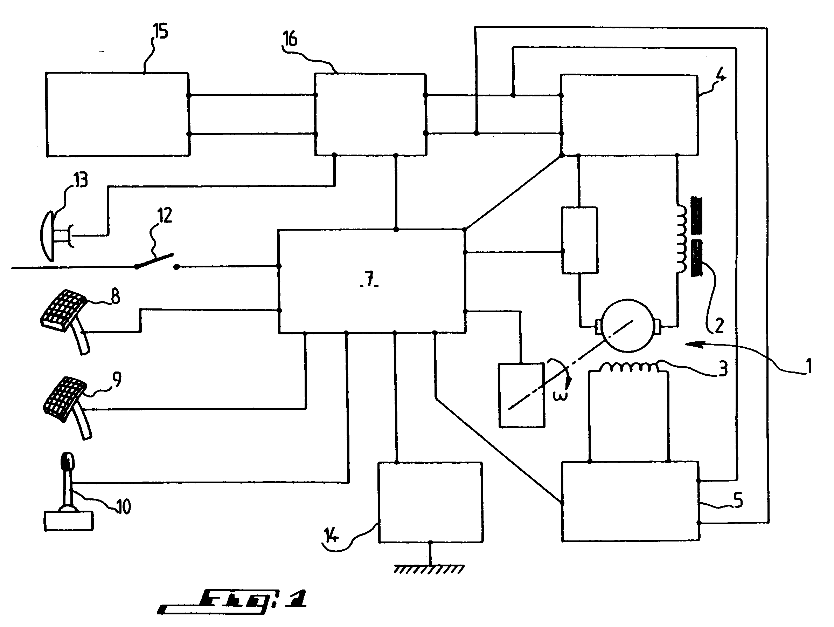

La structure du système entier selon la figure 1 a été faite pour faciliter la compréhension de l'invention dans l'ensemble du système. Ce dernier étant cependant connu en soi, il ne sera pas décrit plus en détail. Ci après on décrira le dispositif de freinage qui constitue l'objet spécifique de l'invention.

Ce dispositif de freinage indiqué en 9 à la figure 1 comprend une pédale classique 18 articulée autour d'un axe 19 porté par un support 20 fixé au tablier 21 du véhicule et une semelle fixe 22. A cette pédale classique est ajoutée une semelle mobile 23 qui est articulée sur la semelle fixe 22 autour d'un axe 24.

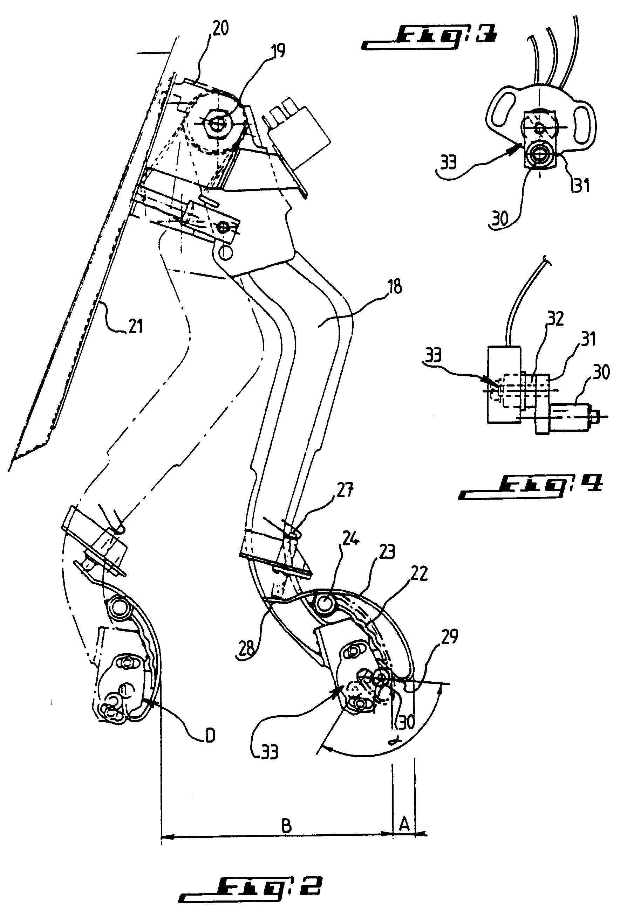

Le semelle mobile 23 comporte deux parties placées de part et d'autre de l'axe d'articulation 24, à savoir une partie relativement courte 28 qui est adaptée pour agir sur un contacteur de butée 27 classique placé sur le corps de la pédale et une partie plus longue 29 qui se termine par une partie repliée 29 adaptée pour venir au contact d'un galet 30 monté sur une extrémité d'un levier pivotant 31 dont l'autre extrémité est solidaire de l'axe 32 d'un potentiomètre rotatif 33. Ce potentiomètre est monté sur le corps de pédale 18. Comme il ressort de la figure 2, la semelle mobile 23 est susceptible de pivoter autour de l'axe 24, par rapport à la semelle fixe 22 jusqu'à ce qu'elle atteigne la position indiquée en traits interrompus où elle est en appui sur la semelle fixe. Ainsi la semelle mobile 23 est déplaçable par rapport à la semelle fixe 22 sur la distance indiquée en A à la figure 2. Ce déplacement angulaire de la semelle 23 provoque la rotation du potentiomètre 33 selon l'angle α. Lorsque la semelle mobile 23 atteint sa position indiquée en traits interrompus elle devient solidaire en pivotement du corps de pédale 18. Si le conducteur continu à agir sur la pédale 23, celle-ci pivote avec le corps de pédale 18 autour de l'axe 19 jusqu'à la position indiquée en traits interrompus. La course de pivotement de l'ensemble de la pédale est indiquée en B.

Le dispositif de frein selon l'invention, qui vient d'être décrit, fonctionne de la manière suivante :

Pour arrêter ou freiner le véhicule, le conducteur lève le pied de l'accélérateur 9 (figure 1), ce qui amène la machine électrique 1 à travailler en génératrice de courant et à déverser son énergie dans la batterie 15. On obtient ainsi un effet de freinage moteur. Si le conducteur désire accroître le freinage du véhicule, il agit sur la pédale de frein 9 en deux phases.

Pendant une première phase il exerce une légère pression du pied sur la semelle mobile 23 qui pivote alors autour de son axe 24 pendant que le corps de pédale 18 reste immobile. Le pivotement de la semelle mobile 23 fait tourner le levier 31 du potentiomètre 33. Ce dernier alimenté par une tension fixe de par exemple 15 volts continue délivre une tension électrique proportionnelle à l'angle de rotation du levier, comprise entre 0 et 15 volts. Cette tension est envoyée au dispositif de contrôle central 7, qui élabore les signaux de commande destinés aux dispositifs de contrôle d'induit et d'excitation 4, 5, déterminant l'énergie renvoyée vers la batterie 15.

La deuxième phase commence lorsque la semelle mobile 23 atteint sa position indiquée en traits interrompus à la figure 2 où elle vient en appui sur la semelle fixe 22. Lorsque le conducteur augmente la pression du pied, l'ensemble de la pédale commence alors à pivoter autour de l'axe 19 vers la position en traits interrompus indiquée à gauche de la figure 2, de la même façon que la pédale de frein d'un véhicule par exemple d'un moteur à combustion interne. Le freinage mécanique ainsi produit se superpose au freinage électrique.

On comprend aisément que les symboles des références A et B de la figure 2 indiquent respectivement les phases de freinage électrique et de freinage simultané électrique et mécanique. L'angle α symbolise la zone d'efficacité optimale du potentiomètre.

La présente invention présente un grand nombre d'avantages par rapport à l'état de la technique. Elle permet une récupération maximum de l'énergie électrique pendant le freinage et une diminution de l'usure des plaquettes du frein mécanique. Elle assure un agrément de conduite grâce à la complémentarité des deux systèmes, à savoir électrique et mécanique. De plus, la sécurité du véhicule est accrue.

## Revendications

1. Dispositif de freinage pour véhicule automobile équipé d'une machine susceptible de fonctionner en moteur électrique d'entraînement du véhicule, alimenté en énergie à partir d'une source d'énergie électrique appropriée, et en génératrice d'énergie électrique susceptible d'être transférée à ladite source, pendant des périodes de freinage, et d'un dispositif électrique de commande de ladite machine en fonction des manoeuvres du conducteur du véhicule, le dispositif de freinage étant du type comprenant un moyen générateur de signaux de commande du dispositif électrique, en vue du transfert d'énergie à ladite source d'énergie électrique, une pédale de frein (18) articulée de façon pivotante sur une structure de support (20) solidaire du véhicule et une semelle (23) montée sur l'extrêmité libre de la pédale (18) et qui constitue l'organe d'actionnement du dispositif de freinage, sur laquelle agit le conducteur lors du freinage, pour produire le freinage par déplacement de la semelle, le dispositif étant adapté pour que la semelle constitue pendant une première course d'actionnement l'organe de freinage électrique et pendant une seconde course d'actionnement suivant la première, la semelle constitue l'organe de freinage électrique et mécanique simultanés, caractérisé en ce que la semelle (23) est réalisée sous forme d'un levier monté pivotant au niveau de l'extrémité de la pédale (18) et adaptée pour effectuer un mouvement de pivotement tout d'abord sélectif relatif par rapport à la pédale, dans le sens d'actionnement de la pédale, sous l'action du conducteur du véhicule, jusqu'à l'atteinte d'une position de solidarisation en pivotement avec la pédale (18) et ensuite en commun avec cette derniere, le mouvement de pivotement sélectif de la semelle produisant l'effet de freinage électrique et le mouvement de pivotement de la semelle et de la pédale, après leur solidarisation, produisant l'effet de freinage simultané électrique et mécanique.

2. Dispositif de freinage selon la revendication 1, caractérisé en ce que le corps de freinage (18) comporte à son extrémité libre une semelle fixe (22) qui porte l'axe (24) d'articulation de la semelle mobile (23) et forme un moyen de butée de la semelle mobile en fin de sa course de mouvement de pivotement relatif.

3. Dispositif de freinage selon la revendication 2, caractérisé en ce que le moyen générateur de signaux de commande précité est réalisé sous forme d'un potentiomètre (33) disposé sur le corps de pédale (18), alimenté par une tension électrique fixe et adapté pour produire une tension de sortie formant signal de commande précité, proportionnelle à l'angle de pivotement (α) de la semelle mobile (23).

4. Dispositif de freinage selon la revendication 3, caractérisé en ce que le potentiomètre (33) est un potentiomètre rotatif dont l'axe (32) est solidaire d'une extrémité d'un levier pivotant (31) et en ce que l'extrémité libre (29) de la semelle mobile (23) attaque l'extrémité libre de ce levier.

5. Dispositif de freinage selon la revendication 4, caractérisé en ce que l'extrémité d'attaque du levier (31) porte un galet (30) et que l'extrémité libre (29) de la semelle mobile est réalisée sous forme d'une partie repliée adaptée pour venir au contact dudit galet.

6. Dispositif de freinage selon l'une des revendications 2 à 5, caractérisé en ce que la semelle mobile (23) présente, au-delà de son axe d'articulation (24) une partie destinée à agir sur un contacteur de butée (27) placé sur le corps de la pédale.

## Patentansprüche

1. Bremsvorrichtung für ein Kraftfahrzeug, das mit einer mit Energie aus einer geeigneten elektrischen Energiequelle gespeisten, als elektrischer Antriebsmotor des Fahrzeugs und als Erzeuger an die besagte Quelle übertragbarer elektrischer Energie, während der Bremsperioden arbeitsfähigen Maschine und mit einer elektrischen Vorrichtung zur Steuerung der besagten Maschine in Abhängigkeit der Betriebsvorgänge des Fahrers des Fahrzeugs ausgerüstet ist, wobei die Bremsvorrichtung derjenigen Gattung, die ein Mittel zur Erzeugung von Signalen zur Steuerung der elektrischen Vorrichtung zum Zweck der Energieübertragung an die besagte elektrische Energiequelle, ein an einem an dem Fahrzeug fest angebrachten Halterungsaufbau (20) in schwenkbarer Weise angelenktes Bremspedal (18) und eine an dem freien Ende des Pedals (18) angeordnete Fussplatte (23), die das Glied zur Betätigung der Bremsvorrichtung bildet und auf welcher der Fahrer während dem Bremsen einwirkt, um das Bremsen durch Bewegung der Fussplatte zu erzeugen, aufweist, wobei die Vorrichtung angepasst ist, damit die Fussplatte, während einem ersten Betätigungshub, das elektrische Bremsglied bildet und während einem zweiten dem ersten nachfolgenden Betätigungshub, die Fussplatte das gleichzeitige elektrische und mechanische Bremsglied bildet, dadurch gekennzeichnet, dass die Flussplatte (23) als im Bereich des Endes des Pedals (18) schwenkbar angeordneter Hebel ausgebildet und angepasst ist, um zuerst eine in Bezug auf das Pedal auswahlfähige relative Schwenkbewegung in der Betätigungsrichtung des Pedals unter der Wirkung des Fahrers des Fahrzeugs bis zum Erreichen einer mit dem Pedal (18) schwenkfesten Verbindungsstellung und dann gemeinsam mit diesem letzteren eine auswahlfähige Bewegung der Fussplatte durchzuführen, welche die elektrische Bremswirkung erzeugt und wobei die Schwenkbewegung der Fussplatte und des Pedals nach deren festen Verbindung das gleichzeitige elektrische und mechanische Bremsen erzeugt.

2. Bremsvorrichtung nach Anspruch 1, dadurch gekennzeichnet, dass der Bremskörper (18) an seinem freien Ende eine ortsfeste Fussplatte (22) aufweist, die den Gelenkzapfen (24) der beweglichen Fussplatte (23) trägt und ein Anschlagmittel für die beweglichen Fussplatte am Ende ihres relativen Schwenkbewegungshubes bildet.

3. Bremsvorrichtung nach Anspruch 2, dadurch gekennzeichnet, dass das vorgenannte Steuersignale erzeugende Mittel als in dem Pedalkörper (18) angeordnetes, durch eine konstante elektrische Spannung gespeistes Potentiometer (33) ausgebildet ist, welches angepasst ist, um eine ein vorgenanntes Steuersignal bildende, mit dem Schwenkwinkel (α) der beweglichen Fussplatte (23) proportionale Ausgangsspannung zu erzeugen.

4. Bremsvorrichtung nach Anspruch 3, dadurch gekennzeichnet, dass das Potentiometer (33) ein Drehpotentiometer ist, dessen Welle (32) mit einem Ende eines Schwenkhebels (31) fest verbunden ist und dass das freie Ende (29) der bewegbaren Fussplatte (23) am freien Ende dieses Hebels angreift.

5. Bremsvorrichtung nach Anspruch 4, dadurch gekennzeichnet, dass das Angriffsende des Hebels (31) eine Rolle (30) trägt und dass das freie Ende (29) der beweglichen Fussplatte als umgebogener Teil ausgebildet ist, der angepasst ist, um mit der besagten Rolle in Berührung zu kommen.

6. Bremsvorrichtung nach einem der Ansprüche 2 bis 5, dadurch gekennzeichnet, dass die bewegbare Fussplatte (23) jenseits ihres Gelenkzapfens (24) einen Teil aufweist, der bestimmt ist, auf einen auf dem Körper des Pedals gestellten Anschlagschalter (27) einzuwirken.

## Claims

1. Braking device for an automotive vehicle fitted with a machine adapted to operate as an electric motor for the driving of the vehicle, fed with energy from a suitable electric energy source and as a generator of electric energy likely to be transferred to the said source during braking periods and with an electric device for the control of the said machine in accordance with handlings of the driver of the vehicle, the braking device being of the type comprising a means for generating signals for the control of the electric device with a view to transfer energy to the said electric energy source, a brake pedal (18) articulated in a pivoting manner onto a support structure (20) made fast to the vehicle and a tread plate (23) mounted at the free end of the pedal (18) and which constitutes the member for the actuation of the braking device upon which the driver is acting during the braking to produce the braking through displacement of the tread plate, the device being adapted in order that the tread plate constitutes during a first stroke of actuation the electric braking member and during a second stroke of actuation following the first one, the tread plate constitutes the simultaneous electric and mechanical braking member, characterized in that the tread plate (23) is provided as a lever pivotally mounted at the level of the end of the pedal (18) and adapted to effect a pivoting motion at first of relative selective character with respect to the pedal in the direction of actuation of the pedal under the action of the driver of the vehicle until reaching a position of being made fast in swinging-bound relationship with the pedal (18) and then in conjunction with the latter, the selective pivoting motion of the tread plate producing the electric braking effect and the pivoting motion of the tread plate and of the pedal after their having been made fast to each other producing the simultaneous electric and mechanical braking.

2. Braking device according to claim 1, characterized in that the braking body (18) comprises at its free end a stationary tread plate (22) which carries the pivot pin (24) of the movable tread plate (23) and forms a stop means for the movable tread plate at the end of its stroke of relative pivoting motion.

3. Braking device according to claim 2, characterized in that the aforesaid control signal generating means is provided as a potentiometer (33) disposed onto the pedal body (18), fed with a fixed electrical voltage and adapted to produce an output voltage forming the aforesaid control signal, proportional to the angle (α) of swinging of the movable tread plate (23).

4. Braking device according to claim 3, characterized in that the potentiometer (33) is a rotary potentiometer the shaft (32) of which is made fast with one end of a pivoting lever (31) and in that the free end (29) of the movable tread plate (23) drives the free end of this lever.

5. Braking device according to claim 4, characterized in that the drive end of the lever (31) carries a roller (30) and that the free end (29) of the movable tread plate is provided as a folded-back portion adapted to contact the said roller.

6. Braking device according to one of claims 2 to 5, characterized in that the movable tread plate (23) exhibits beyond its pivot pin (24) a portion intended to act upon a stop switch (27) placed onto the body of the pedal.
